# EUROPÄISCHE PATENTSCHRIFT

(11) **EP 2 223 411 B1**
(45) Veröffentlichungstag und Bekanntmachung des Hinweises auf die Patenterteilung: **10.08.2016**
(21) Anmeldenummer: 08804577.8
(22) Anmeldetag: 23.09.2008
(51) Int. Cl.: H02K 5/14, H02K 11/02

(54) **GLEICHSTROMMASCHINE**
DIRECT CURRENT MACHINE
MACHINE À COURANT CONTINU

(30) Priorität: 22.11.2007 DE 102007056326
(43) Veröffentlichungstag der Anmeldung: 01.09.2010
(73) Patentinhaber: Robert Bosch GmbH, 70442 Stuttgart (DE)
(72) Erfinder: SHIN, Jae Yong, Songgang-dong Yuseong-gut Daejeon-shi 305-756 (KR); KOPF, Frank, 77833 Ottersweier (DE); SCHEIB, Oliver, 76889 Schweigen-Rechtenbach (DE); LIEDEL, Markus, 91257 Pegnitz (DE); KUPFERER, Michael, 77866 Rheinau Freistett (DE); STRUPP, Michael, 76448 Durmersheim (DE)
(86) Internationale Anmeldenummer: PCT/EP2008/062653
(87) Internationale Veröffentlichungsnummer: WO 2009/065643

(56) Entgegenhaltungen:
- EP-A- 1 763 123
- FR-A- 2 797 110
- US-A- 5 159 222
- US-A1- 2005 225 195

## Beschreibung

### Stand der Technik

Die Erfindung geht aus von einer Gleichstrommaschine, insbesondere einem Gleichstrommotor für den Einsatz in einem Kraftfahrzeug, nach der Gattung des unabhängigen Anspruchs. Derartige bürstenkommutierte Gleichstrommaschinen mit einem Kunststoff-Bürstenträger sind grundsätzlich bekannt, beispielsweise aus der DE 38 18 891 C2. Diese Druckschrift zeigt eine Gleichstrommaschine mit einem scheibenförmigen, dort als Basis bezeichneten Bürstenträger, welcher insgesamt aus Kunststoff besteht und in einer vorgegebenen Position zum Kommutator der Maschine fest mit deren Polgehäuse verbunden ist. Zur elektromagnetischen Verträglichkeit der Anordnung macht die Druckschrift keine Ausführungen.

Aus der US 2005/0225195 A1 geht ein aus Kunststoff gefertigter Bürstenträger für eine Gleichstrommaschine mit zwei festen Bürstenköchern hervor. Auf dem Bürstenträger sind außerhalb eines von Bürstenköchern eingenommenen Sektors des Bürstenträgers drei Entstördrosseln und ein Entstörkondensator sowie deren Anschlussleitungen angeordnet.

Die FR 2 797 110 A1 offenbart einen Kunststoff-Bürstenträger, bei dem vier Bürstenköcher gleichförmig jeweils um 90° versetzt über den Umfang einer inneren Öffnung angeordnet sind. Die Bürstenköcher sind insbesondere einstückig am Bürstenträgers angespritzt bzw. mit diesem vergossen. Eine metallische Grundplatte besitzt vier Aussparungen zur Befestigung des gesamten Bürstenträgers mittels entsprechender Ankopplungselemente.

Die EP 1 111 758 A1 zeigt einen Scheibenwischermotor, der eine Bürstenträgerplatte mit drei Bürsten und Entstörelementen aufweist. Die Bürstenträgerplatte weist ferner drei Bestückungsaussparungen auf, in die die Bürstenköchern eingesetzt sind. Auch die US 5 949 173 offenbart eine Bürstenträgerplatte mit Entstörmitteln und einer Viclzahl von Aussparungen für die Montage von bis zu vier Bürstenköchern. Sowohl in der EP 1 111 758 A1 als auch in der US 5 949 173 sind jedoch die Entstörelemente unmittelbar in radialer Richtung hinter oder in axialer Richtung über den Bürstenköchern angeordnet.

### Offenbarung der Erfindung

Eine erfindungsgemäße Gleichstrommaschine ist in Anspruch 1 definiert.

Die erfindungsgemäße Anordnung hat den Vorteil, dass durch eine zweckmäßige Gestaltung eines modularen Bürstenträgeres ohne zusätzliche Kosten die elektromagnetische Verträglichkeit einer Gleichstrommaschine deutlich verbessert wird. Dazu sind wenigstens zwei Entstördrosseln und wenigstens ein Entstörkondensator sowie deren Anschlussleitungen außerhalb eines von Bestückungsaussparungen für die Montage einer variablen Anzahl von Bürstenköchern eingenommenen Sektors des Bürstenträgers angeordnet, so dass kein Kreuzungspunkt zwischen den radialen Bürstenachsen und den Ableitungen von den Entstörmitteln vorliegt. In besonders vorteilhafter Weise wird durch die getrennte Anordnung einerseits der Bürsten und andererseits der Entstörmittel auf dem Bürstenträger insbesondere erreicht, dass die bereits entstörten Verbindungen der auf dem Bürstcnträger angeordneten Komponenten nicht mehr im Bereich der von den Bürsten erzeugten Störsignale verlaufen und neue Störungen aufnehmen und verbreiten.

Ausführungsbeispiele der Erfindung sind in den Zeichnungen dargestellt und in der nachfolgenden Beschreibung näher erläutert.

Es zeigen:
- Figur 1: eine Schnittdarstellung der erfindungsgemäß gestaltetem Gleichstrommaschine,
- Figur 2: eine perspektivische Teilansicht des Bürstenträgers im Bereich des Anschlusses der auf ihm befestigten Entstörkomponenten,
- Figur 3: eine Draufsicht auf einen mit Bürsten und Entstörkomponenten bestückten Bürstenträger.

### Ausführungsformen der Erfindung.

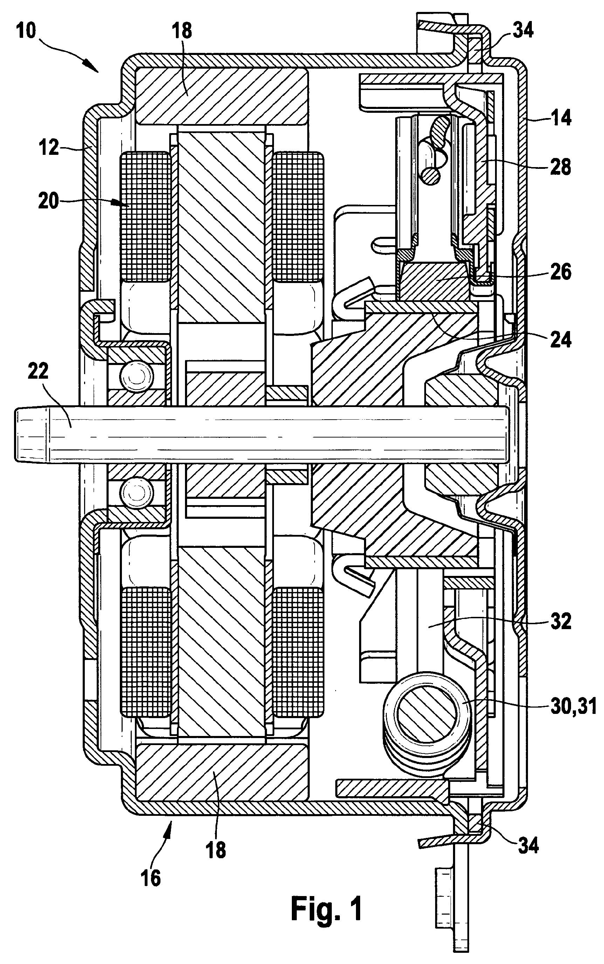

In Figur 1 ist mit 10 eine Gleichstrommaschine bezeichnet in der Ausführung als Gleichstrommotor für den Einsatz in einem Kraftfahrzeug. Die Maschine besitzt ein topfförmiges Polgehäuse 12, welches durch einen Lagerdeckel 14 einseitig geschlossen ist. Innerhalb des Polgehäuses 12 wird ein Stator 16 durch Permanentmagnete 18 ausgebildet, welche am Polgehäuse 12 in bekannter Weise befestigt sind. Ein Rotor 20 der Maschine sitzt auf einer Welle 22, welche einerseits im Polgehäuse 12 und andererseits im Lagerdeckel 14 drehbar gelagert ist. Auf der Rotorwelle 22 ist weiterhin ein Kommutator 24 angeordnet, welchem über Bürsten 26 der Erregerstrom für den Rotor 20 zugeführt wird.

Die Bürsten 26 und weitere Komponenten, insbesondere die erforderlichen Entstörmittel der Maschine, sind auf einem Bürstenträger 28 gehalten. Von den Entstörmitteln des Motors sind in Figur 1 eine Entstördrossel 30 und ein Kondensator 32 zu erkennen. Die Arretierung des Bürstenträgers 28 im Polgehäuse 12 erfolgt durch einen Befestigungsflansch 34, welcher sich über den gesamten Umfang des Bürstenträgers erstreckt und zwischen dem Polgehäuse 12 und dem Lagerdeckel 14 im fertig montierten Zustand der Maschine eingeklemmt ist. Im Einzelnen wird der Aufbau und die Bestückung des Bürstenträgers 28 an Hand der folgenden Figuren erläutert, in denen für gleiche Teile gleiche Bezugszeichen verwendet sind.

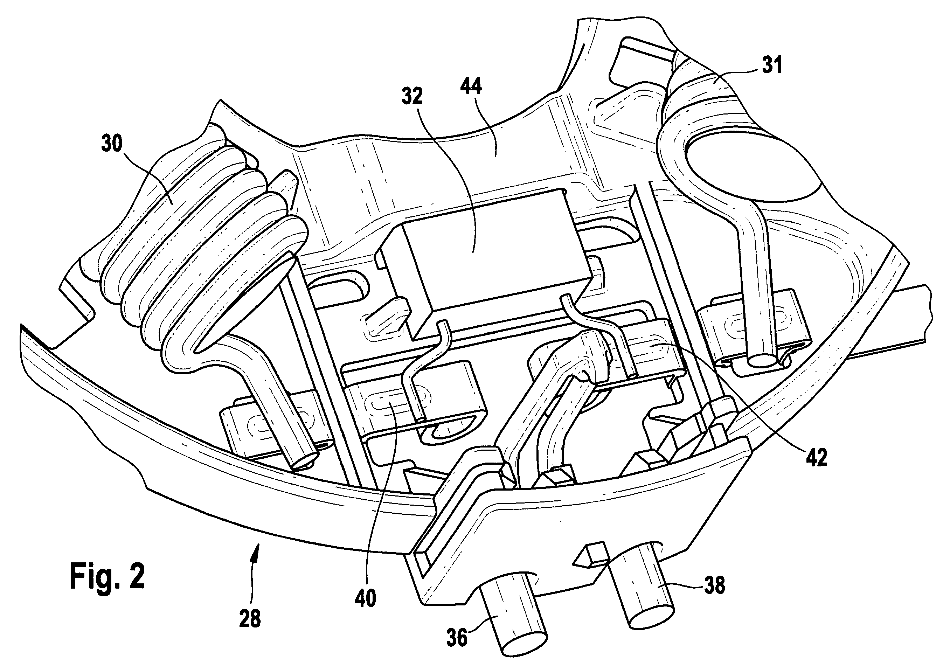

Figur 2 zeigt eine perspektivische Darstellung eines Teils des aus Kunststoff gespritzten Bürstenträgers 28. Die Stromzufuhr von einer nicht dargestellten Gleichspannungsquelle erfolgt über zwei Anschlussleitungen 36 und 38, welche einerseits mit dem positiven und andererseits mit dem negativen Pol der nicht dargestellten Gleichspannungsquelle sowie über Kontaktstücke 40 und 42 einerseits mit den Entstördrosseln 30 und 31 verbunden sind. Gleichzeitig liegt die Anschlussleitung 36 an einer Elektrode und die Anschlussleitung 38 an der anderen Elektrode des Entstörkondensators 32. Dieser ist in einer senkrecht zur Maschinenachse ausgerichteten, als Tasche 44 ausgebildeten Halterung dauerhaft und schüttelsicher arretiert. Die Tasche 44 ist hierbei einteilig mit dem Bürstenträger 28 aus Kunststoff gespritzt. Anstelle einer taschenförmigen Gestaltung kann die Halterung jedoch auch in Form von Haltearmen oder in Form eines Haltebügels ausgeführt sein, wobei es wesentlich ist, dass die Ausrichtung der Halterung jeweils senkrecht zur Maschinenachse verläuft, um eine dauerhaft schüttelsichere Arretierung des Kondensators 32 zu gewährleisten.

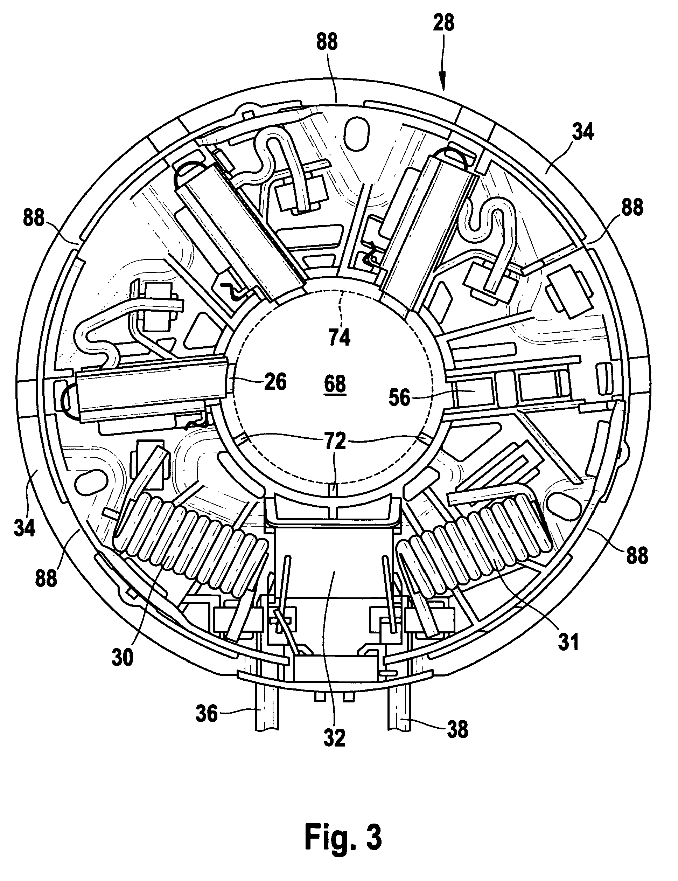

Figur 3 zeigt eine Draufsicht auf einen mit Bürsten 26 und Entstörkomponenten 30, 31 und 32 bestückten Bürstenträger 28, aus welcher die Verteilung der Bestückungskomponenten auf dem Bürstenträger ersichtlich ist. Die Darstellung zeigt, dass die Bestückungsaussparungen 56 für die Bürstenträger 28 so auf der Grundplatte 54 angeordnet sind, dass die Bürsten in einem ersten, sich etwa über die obere Hälfte der Grundplatte erstreckenden Sektor und die elektrischen Entstörmittel 30, 31, 32 in einem zweiten Sektor auf der unteren Hälfte der Grundplatte 54 liegen. Durch diese Anordnung erreicht man, dass die entstörten elektrischen Verbindungen zu den Drosseln 30 und 31 und zu dem Kondensator 32 außerhalb des von den Bürsten 26 eingenommenen oberen Sektors des Bürstenträgers 28 verlaufen und die Längsachsen der Bürsten sich nicht mit den Kontaktstreifen 40, 42 schneiden, welche zwischen den elektrischen Anschlussleitungen 36, 38 und den Entstördrosseln 30, 31 liegen. So werden in die bereits entstörten elektrischen Verbindungen von den Bürsten keine Störsignale.mehr induziert, wodurch die elektromagnetische Verträglichkeit (EMV) der Maschine deutlich verbessert wird.

Im unteren Bereich der zentralen Öffnung 68 im Bürstenträger 28 sind drei Zentrierrippen 72 zu erkennen, welche etwa gleich weit in die zentrale Öffnung 68 des Bürstenträgers 28 hineinragen wie die Bürsten 26 selbst bei ihrer kontaktierenden Auflage auf dem in Figur 3 nicht dargestellten Kommutator 24. Diese Gestaltung ist durch eine gestrichelte Kreislinie 74 angedeutet. Auf diese Weise wird die Zentrierung eines in seiner Gestaltung im Wesentlichen der gestrichelten Linie 74 entsprechenden Bestückungshilfsmittels zum Einbringen des Kommutators 24 in die zentrale Öffnung 68 im Bürstenträger 28 deutlich erleichtert. Aus Symmetriegründen sind dabei die Zentrierrippen 72 gleichmäßig über den nicht von den Bürsten 26 besetzten unteren Sektor des Bürstenträgers 28 verteilt.

Weiterhin ist in Figur 3 noch die Gestaltung des Befestigungsflansches 34 für den Bürstenträger 28 dargestellt, welcher sich über den gesamten Umfang des Bürstenträgers 28 erstreckt, mit diesem jedoch nur punktuell über mehrere, am Umfang verteilte Stege 88 verbunden ist. Der Befestigungsflansch 34 und die Stege 88 sind einteilig mit dem Bürstenträger 28 aus Kunststoff gespritzt. Zur Arretierung des Bürstenträgers 28 ist der Flansch 34 zwischen dem Rand des Polgehäuses 12 und dem gegenüberliegenden Rand des Lagerdeckels 14 fest eingeklemmt, wodurch eine sichere Halterung und exakte axiale Positionierung des Bürstenträgers 28 gewährleistet sind. Gleichzeitig wird jedoch durch die punktuelle Verbindung des Bürstenträgers 28 mit dem Befestigungsflansch 34 der Bürstenträgerkörper weitgehend vom Polgehäuse 12 entkoppelt, so dass sich unterschiedliche Wärmedehnungen des Bürstenträgers 28 und des Polgehäuses 12 individuell ausbilden können, ohne dass sich die Grundplatte 54 des Bürstenträgers 28 verwölbt. Zusätzlich entsteht eine Geräuschentkoppelung zwischen dem Bürstenträger 28 und dem Polgehäuse 12 mit einer deutlichen Verminderung der von der Maschine abgestrahlten Geräusche.

## Patentansprüche

1. Gleichstrommaschine, insbesondere Gleichstrommotor für den Einsatz in einem Kraftfahrzeug; mit einem Stator (16), einem drehbar in einem Polgehäuse (12) gelagerten Rotor (20) mit einem Kommutator (24), und mit einem im Wesentlichen aus Kunststoff gefertigten Bürstenträger (28) zur Halterung von wenigstens zwei Bürsten (26), wobei der Bürstenträger (28) Mittel aufweist zur Verbesserung der elektromagnetischen Verträglichkeit (EMV) der Maschine, **dadurch gekennzeichnet, daß**
eine Grundplatte (54) des Bürstenträgers (28) eine Mehrzahl von Bestückungsaussparungen (56) für die Montage einer variablen Anzahl von Bürstenköchern (64) aufweist, so dass *wahlweise* zwei, ***drei* oder vier** Bürsten (26) in einem Sektor des Bürstenträgers (28) ***bestückt werden können,*** wobei wenigstens zwei Entstördrosseln (30,31) und wenigstens ein Entstörkondensator (32) sowie deren Anschlussleitungen (36,38;40,42) außerhalb des von den Bürsten (26) eingenommenen Sektors des Bürstenträgers (28) angeordnet sind.

## Claims

1. DC machine, in particular DC motor for use in a motor vehicle, comprising a stator (16), a rotor (20) which is rotatably mounted in a pole housing (12) and has a commutator (24), and comprising a brush holder (28), which is produced substantially from plastic, for holding at least two brushes (26), wherein the brush holder (28) has means for improving the electromagnetic compatibility (EMC) of the machine, **characterized in that** a base plate (54) of the brush holder (28) has a plurality of fitting cutouts (56) for mounting a variable number of brush cartridges (64), so that two, three or four brushes (26) can be selectively fitted in one sector of the brush holder (28), wherein at least two interference-suppression coils (30, 31) and at least one interference-suppression capacitor (32) and the connection lines (36, 38; 40, 42) of the interference-suppression coils and of the interference-suppression capacitor are arranged outside the sector of the brush holder (28) which is populated with the brushes (26).

## Revendications

1. Machine à courant continu, en particulier moteur à courant continu pour l'utilisation dans un véhicule automobile, comprenant un stator (16), un rotor (20) monté de manière rotative dans un boîtier de stator (12), avec un collecteur (24), et comprenant un porte-balais (28) fabriqué essentiellement en plastique pour retenir au moins deux balais (26), le porte-balais (28) présentant des moyens pour améliorer la compatibilité électromagnétique (CEM) de la machine, **caractérisée en ce**
**qu'**une plaque de base (54) du porte-balais (28) présente une pluralité d'évidements de réception (56) pour le montage d'un nombre variable de fourreaux de porte-balais (64), de telle sorte que, de manière sélective, deux, trois ou quatre balais (26) puissent être reçus dans un secteur du porte-balais (28), au moins deux bobines d'antiparasitage (30, 31) et au moins un condensateur d'antiparasitage (32) ainsi que leurs conduites de raccordement (36, 38 ; 40, 42) étant disposés à l'extérieur du secteur du porte-balais (28) occupé par les balais (26).
